# EUROPÄISCHE PATENTANMELDUNG

(11) **EP 1 643 179 A1**
(43) Veröffentlichungstag der Anmeldung: **05.04.2006**
(21) Anmeldenummer: 05021423.8
(22) Anmeldetag: 30.09.2005
(51) Int. Cl.: F16L 33/30, F16L 33/207

(54) **Schlauchnippel und Schlauchverbindungsmittel**

(30) Priorität: 01.10.2004 DE 202004015244 U
(71) Anmelder: Kottmann GOSLA GmbH, 58638 Iserlohn (DE)
(72) Erfinder: Meyer, Hans-Peter, 58638 Homor (DE); Dragoljevic, Branislav, 58638 Iserlohn (DE)
(74) Vertreter: Graefe, Jörg

(57) **Zusammenfassung**

Schlauchnippel (1) für ein Schlauchverbindungsmittel (10) zum Einsetzen in ein Ende eines Schlauchs mit einem in den Schlauch einsetzbaren ersten Bereich (5) des Schlauchnippels (1) mit einer dann an den Schlauch anliegenden Mantelfläche, wobei die Mantelfläche eine Rändelung (7) aufweist.

## Beschreibung

Die Erfindung betrifft einen Schlauchnippel für ein Schlauchverbindungsmittel zum Einsetzen in ein Ende eines Schlauchs mit einem in den Schlauch einsetzbaren ersten Bereich des Schlauchnippels mit einer dann an dem Schlauch anliegenden Mantelfläche. Die Erfindung betrifft ferner ein Schlauchverbindungsmittel mit einem derartigen Schlauchnippel.

Ein Schlauchnippel der eingangs genannten Art ist in der Zeichnung dargestellt.

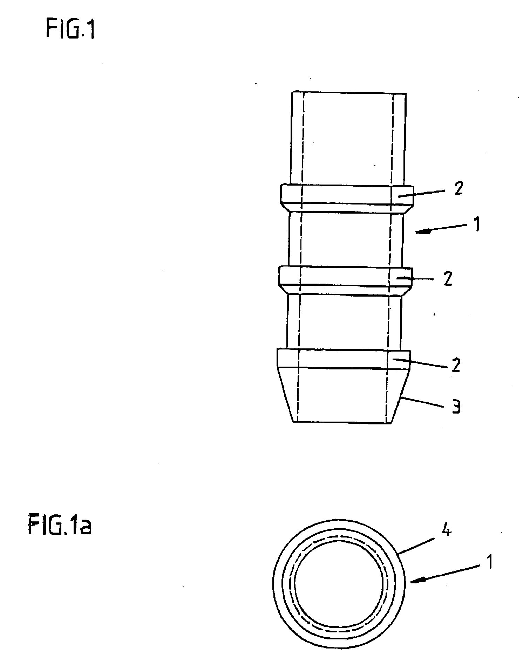

Darin zeigt
- Fig. 1 und Fig. 1a: jeweils eine Ansicht eines aus dem Stand der Technik bekannten Schlauchnippels.

Der in den Figuren 1 und 1 a dargestellte Schlauchnippel weist eine so genannte Tannenbaumstruktur auf. Die Tannenbaumstruktur wird durch Erhaben der Ringe 2 auf der Außenseite des Schlauchnippels 1 und sich an die erhabenen Ringe 2 Richtung zum Ende des Schlauchnippels 1 anschließende Anlaufschrägen 3 ausgebildet. Die Anlaufschrägen 3 ermöglichen ein vereinfachtes Einschieben des Schlauchnippels in ein Schlauchende. Bei einer bestehenden Verbindung zwischen dem Schlauchnippel 1 und dem Schlauch erschweren die erhabenen Ringe 2 ein Herausziehen des Schlauchnippels 1 aus dem Schlauch. Die Verbindung zwischen Schlauch und Schlauchnippel 1 hat durch diese Tannenbaumstrukturen eine höhere Zugfestigkeit als ein Schlauchnippel mit einer glatten Außenfläche ohne Tannenbaumstrukturen.

Die Verbindungskräfte zwischen dem Schlauchnippel 1 und dem Schlauch werden im Wesentlichen in dem Bereich der erhabenen Ringe 2 bereitgestellt. An diesen Punkten liegt der Schlauch mit einer hohen Kraft an dem Schlauchnippel 1 an. In dem Bereich zwischen den Ringen 2 wirken dagegen Kräfte zwischen dem Schlauchnippel 1 und dem Schlauch, die nur zu einem geringen Teil zu den Haltekräften, die der Auszugskraft entgegenwirken, beitragen. Bei einer ungünstigen Konstellation kann es sogar dazu kommen, dass der Schlauch in dem Bereich zwischen den Ringen 2 nicht oder nur zum Teil an dem Schlauchnippel 1 anliegt. Die Verbindungskräfte zwischen dem Schlauchnippel 1 und dem Schlauch 1 wirken dann ausschließlich zwischen den Ringen 2 und dem Schlauch.

Schlauchnippel mit der in der Fig. 1 und 1a dargestellten Tannenbaumstruktur haben sich in der Vergangenheit als praxistauglich erwiesen. Es besteht jedoch seit langem ein Bedarf an einer Verbesserung der Zugfestigkeit der Verbindung zwischen einem Schlauch und einem Schlauchnippel. Hier setzt die vorliegende Erfindung an.

Der Erfindung liegt die Aufgabe zugrunde, die Zugfestigkeit der Verbindung zwischen einem Schlauchnippel der eingangs genannten Art und einem Schlauch zu verbessern.

Diese Aufgabe wird erfindungsgemäß dadurch gelöst, dass die Mantelfläche des ersten Bereichs des Schlauchnippels eine Rändelung aufweist. Durch die Rändelung im ersten Bereich des Schlauchnippels wird die Haftreibung zwischen dem Schlauchnippel und einem Schlauch erhöht. Diese Erhöhung der Haftreibung macht es möglich, dass Verbindungen zwischen einem erfindungsgemäßen Schlauchnippel und einem Schlauch mit höherer Zugfestigkeit hergestellt werden als dies mit den aus dem Stand der Technik bekannten Schlauchnippeln der Fall ist.

Die Rändelung eines erfindungsgemäßen Schlauchnippels kann eine Linksrechtsrändelung oder eine Kreuzrändelung sein. Die Rändelung ist vorzugsweise nach DIN 82 (RGE beziehungsweise RKE) ausgeführt. Die Spitzen der Rändelung sind vorzugsweise erhöht.

Ein erfindungsgemäßer Schlauchnippel kann in einem zweiten Bereich eine Wulst aufweisen. Die Wulst kann einen Außendurchmesser haben, der 5 bis 15 % größer ist als der Außendurchmesser des Schlauchnippels im ersten Bereich. Der zweite Bereich, in welchem die Wulst vorgesehen ist, schließt sich vorzugsweise in Richtung zum Ende des Schlauchnippels an den ersten Bereich an. Auch die Wulst kann eine Rändelung aufweisen. Diese Rändelung kann dann ebenso ausgeführt sein wie die Rändelung der Mantelfläche im ersten Bereich.

Der Übergang von dem ersten Bereich zum zweiten Bereich ist vorzugsweise rampenartig ausgebildet. Der zweite Bereich kann zum Ende des Schlauchnippels hin eine Anlaufschräge aufweisen.

Ein erfindungsgemäßer Schlauchnippel kann aus einem Metall oder einer Metalllegierung oder aus einem Kunststoff hergestellt sein.

Ein erfindungsgemäßes Schlauchverbindungsmittel, in dem ein erfindungsgemäßer Schlauchnippel der vorgenannten Art eingesetzt ist, kann neben dem Schlauchnippel eine Schlauchhülse umfassen. Diese Schlauchhülse umgreift vorzugsweise den ersten Bereich des Schlauchnippels. Die Schlauchhülse kann zumindest abschnittsweise einen Innendurchmesser haben, der um weniger als die Wandstärke des Schlauchs größer ist als der Außendurchmesser der Wulst.

Ein Ausführungsbeispiel für einen erfindungsgemäßen Schlauchnippel und für ein erfindungsgemäßes Schlauchverbindungsmittel ist in der Zeichnung näher dargestellt. Darin zeigt
- Fig. 2 und 2a: Ansichten des Schlauchnippels und
- Fig. 3: eine Schnittdarstellung des Schlauchverbindungsmittels.

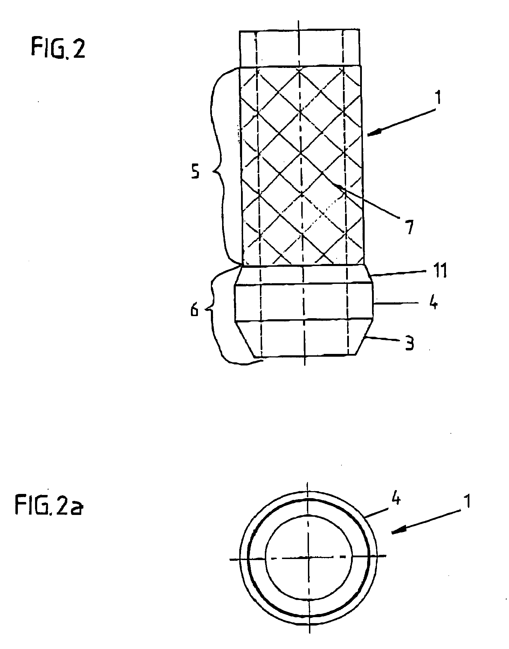

Der in den Fig. 2 und 2a in einer Seitenansicht beziehungsweise einer stirnseitigen Ansicht dargestellte Schlauchnippel 1 weist einen ersten Bereich 5 und einen zweiten Bereich 6 auf.

Der zweite Bereich 6 des Schlauchnippels 1 schließt sich unmittelbar an das Ende des Schlauchnippels an. In diesem zweiten Bereich weist der Schlauchnippel eine Wulst 4 auf. Diese Wulst 4 schließt sich zum Ende hin einer Anlaufschräge 3 an. Der Übergang 11 des zweiten Bereichs 6 zum ersten Bereich 5 ist rampenartig ausgebildet.

Im ersten Bereich 5 des Schlauchnippels 1 ist eine Mantelfläche mit einer Rändelung 7 vorgesehen. Die Rändelung, es handelt sich hierbei um eine Kreuzrändelung nach DIN 82 (RKE) mit überhöhten Spitzen.

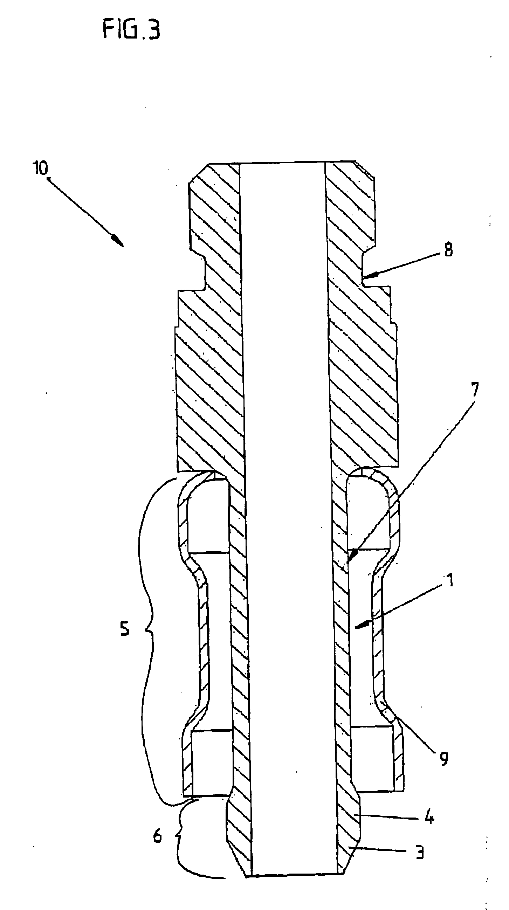

Ein Schlauchnippel 1 wie er in der Fig. 2 und 2a dargestellt ist, wird in dem erfindungsgemäßen Schlauchverbindungsmittel 10 gemäß Fig. 3 eingesetzt. An den Schlauchnippel 1 schließt sich dabei ein Nippelkopf 8 an, Dieser Nippelkopf weist verschiedene Anschlussstrukturen auf, über welche das Schlauchverbindungsmittel beispielsweise an eine Schlauchkupplung anschließbar sein kann.

Neben dem Schlauchnippel 1 und dem damit fest verbundenen Nippelkopf 8 weist das Schlauchverbindungsmittel 10 eine Schlauchhülse 9 auf. Diese Schlauchhülse, die als Presshülse ausgestaltet ist, ist konzentrisch zum Schlauchnippel, in dessen ersten Bereich 5 umgreifend angeordnet. Die Schlauchhülse weist einen mittleren Abschnitt mit einem verringerten Durchmesser auf. In diesem Bereich ist die Schlauchhülse 9 zusammengedrückt, um einen nicht dargestellten Schlauch an dem Schlauchnippel 1 und insbesondere dessen erstem Bereich 5 zu fixieren.

Durch die Schlauchhülse 9 und insbesondere den mittleren Bereich der Schlauchhülse 9 ist der Schlauch an der Rändelung 7 im ersten Bereich 5 des Schlauchnippels fixiert. Um den Schlauch von dem Schlauchverbindungsmittel abzuziehen, müssen Haltekräfte überwunden werden, die aufgrund der Wulst 4 und der Rändelung 7 zwischen dem Schlauch und dem Schlauchnippel 1 verstärkt im Vergleich zu einem aus dem Stand der Technik bekannten Schlauchnippel wirken.

## Patentansprüche

1. Schlauchnippel (1) für ein Schlauchverbindungsmittel (10) zum Einsetzen in ein Ende eines Schlauchs mit einem in den Schlauch einsetzbaren ersten Bereich (5) des Schlauchnippels (1) mit einer dann an den Schlauch anliegenden Mantelfläche,
**dadurch gekennzeichnet,**
**dass** die Mantelfläche eine Rändelung (7) aufweist.

2. Schlauchnippel nach Anspruch 1, **dadurch gekennzeichnet, dass** die Rändelung (7) eine Linksrechtsrändelung ist.

3. Schlauchnippel nach Anspruch 1, **dadurch gekennzeichnet, dass** die Rändelung eine Kreuzrändelung (7) ist.

4. Schlauchnippel nach einem der Ansprüche 1 bis 3, **dadurch gekennzeichnet, dass** die Spitzen der Rändelung (7) erhöht sind.

5. Schlauchnippel nach einem der Ansprüche 1 bis 4, **dadurch gekennzeichnet, dass** der Schlauchnippel in einem zweiten Bereich (6) eine Wulst (4) aufweist.

6. Schlauchnippel nach Anspruch 5, **dadurch gekennzeichnet, dass** sich der zweite Bereich (6) mit der Wulst (4) ein einem Ende des Schlauchnippels (1) an den ersten Bereich (5) anschließt.

7. Schlauchnippel nach Anspruch 5 oder 6, dass der Wulst eine Rändelung aufweist.

8. Schlauchnippel nach Anspruch 7, **dadurch gekennzeichnet, dass** die Rändelung der Wulst der Rändelung der Mantelfläche entspricht.

9. Schlauchnippel nach einem der Ansprüche 5 bis 8, **dadurch gekennzeichnet, dass** der Übergang (1) von dem ersten Bereich (5) zum zweiten Bereich (6) rampenartig ausgebildet ist.

10. Schlauchnippel nach einem der Ansprüche 5 bis 9, **dadurch gekennzeichnet, dass** der zweite Bereich (6) zum Ende des Schlauchnippels hin eine Anlaufschräge (3) aufweist.

11. Schlauchnippel nach einem der Ansprüche 1 bis 10, **dadurch gekennzeichnet, dass** der Schlauchnippel (1) aus Metall besteht.

12. Schlauchnippel nach einem der Ansprüche 1 bis 10, **dadurch gekennzeichnet, dass** der Schlauchnippel (1) aus Kunststoff besteht.

13. Schlauchverbindungsmittel mit einem Schlauchnippel (1) und einer Schlauchhülse (9), wobei der Schlauchnippel (1) in ein Ende eines Schlauches einsetzbar ist und die Schlauchhülse (9) das Ende des Schlauches einschließt,
**dadurch gekennzeichnet,**
**dass** der Schlauchnippel (1) nach einem der Ansprüche 1 bis 12 ausgebildet ist.

14. Schlauchverbindungsmittel nach Anspruch 13, **dadurch gekennzeichnet, dass** die Schlauchhülse (9) nur den ersten Bereich (5) des Schlauchnippels (1) übergrelft.

15. Schlauchverbindungsmittel nach Anspruch 14, **dadurch gekennzeichnet, dass** die Schlauchhülse (9) einen Innendurchmesser hat, der um weniger als die Wandstärke des Schlauches größer ist als der Außendurchmesser der Wulst (4).
